# EUROPÄISCHE PATENTSCHRIFT

(11) **EP 0 525 278 B1**
(45) Veröffentlichungstag und Bekanntmachung des Hinweises auf die Patenterteilung: **03.01.1996**
(21) Anmeldenummer: 92101749.7
(22) Anmeldetag: 03.02.1992
(51) Int. Cl.: B09B 1/00, E02D 31/00, G01M 3/00

(54) **Anordnung auf Dichtigkeit kontrollierbarer Dichtungsbahnen aus Kunststoff für Deponien**
Plastic liner arrangement wich can be monitored for their permeability
Agencement de nappes étanches en matière plastique, avec contrôle d'étanchéité pour décharges

(30) Priorität: 01.08.1991 DE 4125430
(43) Veröffentlichungstag der Anmeldung: 03.02.1993
(73) Patentinhaber: FRANK DEPONIETECHNIK GmbH, D-35410 Hungen (DE)
(72) Erfinder: Hergenröther, Hans-Günter, W-6478 Nidda 12 (DE)
(74) Vertreter: Schubert, Siegmar, Dipl.-Ing.

(56) Entgegenhaltungen:
- EP-A- 0 408 938
- EP-A- 0 418 209
- WO-A-88/06929
- DE-A- 3 322 772
- DE-A- 3 544 264
- FR-A- 2 362 051
- US-A- 3 252 155
- US-A- 4 947 470

## Beschreibung

Die Erfindung betrifft eine Anordnung auf Dichtigkeit kontrollierbarer Dichtungsbahnen aus Kunststoff für Deponien nach dem Oberbegriff des Anspruchs 1.

Um Schadstoffe aus Deponien nicht in tiefere Bodenschichten sickern zu lassen, ist aus der Praxis ein mehrlagiger Aufbau von Dichtungsbahnen aus Kunststoff bekannt, wobei in Kontrollschächte mündende Dränagerohre zur Kontrolle der Dichtigkeit dienen können. Dieser Aufbau ist jedoch aufwendig und deswegen nicht immer realisierbar. Das Austreten von Sickerwasser aus den in die Kontrollschächte mündenden Rohren kann nicht ohne weiteres fernüberwacht werden.

Zum Stand der Technik auf dem Gebiet der Abdichtung von Deponien gehört eine dreilagige Dichtungsbahn mit zwei äußeren Kunststofflagen und einer dazwischen eingebetteten Aluminiumschicht. Der gesamte Aufbau dieser dreilagigen Dichtungsbahn soll jedoch dazu dienen, einen Durchlaß verschiedener Schadstoffe wirksam zu verhindern. Die Aluminiumbahn eignet sich wegen ihrer hohen elektrischen Leitfähigkeit, die durch Leckagen nur geringfügig prozentual verändert würde, nicht ohne weiteres dazu, z.B. durch Erfassung der Leitfähigkeit die Dichtigkeit der angrenzenden Kunststoffbahnen zu melden.

Ferner war eine Verbundfolie zum Auskleiden von Flüssigkeitsbehältern bekannt, die aus mindestens drei übereinander angeordneten Lagen zusammengesetzt ist (DE-A-33 22 772). Von den drei Lagen sind die obere Folienlage und die untere Folienlage elektrisch neutral. Die mittlere Folienlage ist in leitfähige, jeweils elektrisch getrennte Felder aufgeteilt, um den Ort eines Lecks bestimmen zu können. Ein Alarm mit Ortsangabe wird ausgelöst, wenn das genügend leitfähig gemachte Behältermedium in einen solchen leitfähigen Bereich eindringt, der durch eines der obengenannten Felder definiert ist. An den Rändern von zwei nebeneinanderliegenden Verbundfolien sind leitfähige Randabschnitte angebracht, die eine auftretende Undichtigkeit zwischen den entsprechenden Verbindungsstellen melden sollen. Die leitfähigen Felder und Randabschnitte können aus einer leitfähigen Klebeschicht oder aus einer Graphitfolie bestehen. Für die Alarmmeldung und Ortsanzeige wird zwischen der leitfähigen Behälterflüssigkeit und den Feldern eine Spannung angelegt, welche im Falle eines Eindringens von Behälterflüssigkeit in ein Feld einen Kurzschlußstrom hervorruft.

Weiterhin ist es bekannt, für Deponien zwei Lagen aus PEHD-Folie am Rand zu verbinden und den dadurch gebildeten Innenraum zwischen den Lagen mit elektrisch leitfähigem Material wie Wasser oder nassem Sand zu füllen (US-A-4 947 470). Die Dichtigkeit der Lagen wird durch Anlegen einer Spannung an eine Innenelektrode in dem Innenraum und mindestens eine Grundelektrode in einem Außenraum sowie Spannungserfassung mit einer Detektoranordnung in dem Innenraum festgestellt.

Zum Prüfen der Dichtigkeit von Flüssigkeitsbehältern für Lebensmittel, um die Qualität der Lebensmittel zu gewährleisten, war es auch bereits bekannt, an oder in dem Behälter ein dünnes elektrisch leitfähiges Band, welches aus einem Polyolefin, nämlich Polyäthylen hoher Dichte oder Polypropylen oder dessen Copolymeren besteht (FR-A-2 362 051), anzuordnen. Die Behälterwand kann dabei aus einer Verbundfolie gebildet sein, in die eine Metallschicht eingebettet ist.

In dem Deponiebau ist es weiter bereits bekannt, Rohrleitungen und Formteile für Rohrleitungssysteme aus einem elektrisch leitfähigen Kunststoff PE-el herzustellen. Das gleiche gilt für Plattenmaterial, z.B. für Schachtauskleidungen, wo aus Sicherheitsgründen eine elektrisch leitfähige Außenfläche benötigt wird, die statische Aufladung und eine dadurch bedingte Explosionsgefahr verhindert.

Der vorliegenden Erfindung liegt die Aufgabe zugrunde, eine einfach zu fertigende mindestens doppellagige Kunststoffdichtungsbahn mit einer Kontrollmöglichkeit zu schaffen, die eine wirksame, auch selbsttätige Fernkontrolle der Dichtigkeit beider Kunststoffbahnen gestattet.

Diese Aufgabe wird erfindungsgemäß nach dem kennzeichnenden Teil des Anspruchs 1 dadurch gelöst, daß zwei äußere Dichtungsbahnen der mindestens doppellagigen Kunststoffdichtungsbahn aus PEHD bestehen und daß zwischen den beiden äußeren Dichtungsbahnen eine durchgehende Kontrollage aus elektrisch leitfähigem PEHD eingebettet ist. Damit kann die elektrische Leitfähigkeit dieser Kontrollage überwacht, auch fernüberwacht, werden, um das Eindringen von Feuchtigkeit auf die Kontrollage durch eine der anliegenden Kunststoffdichtungsbahnen festzustellen, welche die elektrische Leitfähigkeit der Kontrollage verändert.

Die erfindungsgemäße mindestens doppellagige Kunststoffdichtungsbahn, deren äußere Lagen aus PEHD bestehen, eignet sich besonders gut zur einfachen Verbindung mit der zwischen ihnen eingebetteten Kontrollage, ebenfalls aus PEHD, jedoch des elektrisch leitfähigen Typs.

Die erfindungsgemäße Anordnung einer Kunststofflage aus PEHD des Typs elektisch leitfähig kann sowohl zwischen zwei glatten Dichtungsbahnen als auch zwischen zwei außen strukturierten Dichtungsbahnen erfolgen. Es ist auch möglich, die Kunststofflage aus PEHD elektrisch leitfähig in sogenannten Betonschutzplatten zum Schutz von Betonschichten einzusetzen, wobei die Betonschutzplatten ebenfalls zwei äußere Lagen aus PEHD aufweisen. Eine weitere Anwendung der erfindungsgemäßen Anordnung besteht darin, daß die doppellagige Kunststoffdichtungsbahn mit der eingebetteten Kontrollage aus elektrisch leitfähigem PEHD Bestandteile einer Doppelwand für Behälter- und Schachtbauwerke ist.

An die Kontroll-Lage aus elektrisch leitfähigem PEHD kann eine Widerstandsmeßeinrichtung angeordnet sein, die Widerstandsänderungen der elektrisch leitfähigen PEHD-Lage erfaßt, wenn diese mit Sickerwasser durch eine der Kunststofflagen hindurch beaufschlagt wird.

Eine alternative Kontrollmöglichkeit besteht darin, daß mit einer Überwachungseinrichtung der mittels einer Spannungsqelle durch die Kontoll-Lage getriebene Strom überwacht wird, dessen Betrag von der elektrischen Leitfähigkeit und somit ebenfalls von Sickerwasser an der elektrisch leitfähigen PEHD-Schicht abhängt.

Ausführungsbeispiele der Erfindung werden im folgenden anhand der Zeichnung mit drei Figuren erläutert. Es zeigen jeweils im Schnitt:
- Fig. 1: eine Anordnung, bei der die Kontroll-Lage in eine doppellagige glatte Kunststoffdichtungsbahn eingebettet ist,
- Fig. 2: eine Anordnung, bei der die Kontroll-Lage in eine strukturierte doppellagige Dichtungsbahn eingebettet ist, und
- Fig. 3: eine in eine Betonschutzplatte aus PEHD eingebettete Kontroll-Lage.

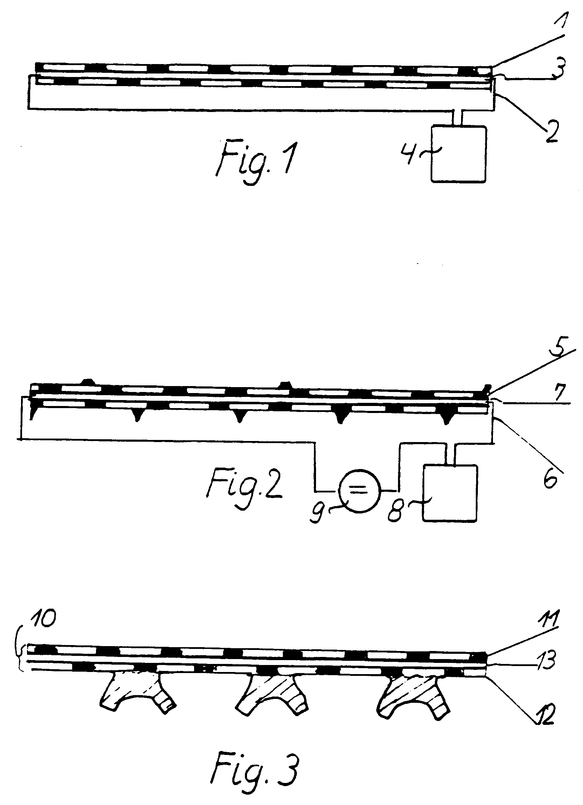

In Fig. 1 sind mit 1 und 2 zwei glatte Lagen einer doppellagigen Kunststoffdichtungsbahn aus PEHD bezeichnet. Zwischen diesen Lagen ist eine Kontroll-Lage 3 aus PEHD des Typs elektrisch leitfähig eingebettet, so daß alle drei Lagen fest miteinander verbunden sind.

In Fig. 1 ist weiterhin angedeutet, wie mit einer elektrischen Widerstandsmeßeinrichtung 4, die an zwei verschiedenen Stellen der Kontroll-Lage angeschlossen ist, deren elektrische Leitfähigkeit zwischen den Anschlußstellen überwacht wird. Die elektrische Leitfähigkeit der Kontroll-Lage 3 ändert sich, wenn diese durch eine der Lagen 1,2 mit Sickerwasser oder sonstiger Feuchtigkeit im Einbauzustand der Doppeldichtung beaufschlagt wird.

Die Anordnung nach Fig. 2 unterscheidet sich von derjenigen in Fig. 1 dadurch, daß in der zweiten Ausführungsform Dichtungsbahnen 5,6 außen strukturiert sind. Zwischen diesen beiden Dichtungsbahnen aus PEHD befindet sich wiederum eine Kontroll-Lage 7 aus PEHD elektrisch leitfähig.

Zur Überwachung der elektrischen Leitfähigkeit zwischen zwei Anschlußstellen an der Kontroll-Lage sind eine elektrische Überwachungseinrichtung 8 sowie eine Spannungsquelle 9 vorgesehen, die einen elektrischen Strom durch die Kontroll-Lage treibt. Der von Leckagen der Schichten 5 und 6 abhängige Strom wird mit der elektrischen Überwachungseinrichtung 8 überwacht, die eine nicht dargestellte entfernte Anzeigeeinrichtung betätigen kann.

Die dritte Ausführungsform gemäß Fig. 3 zeigt eine Betonschutzplatte 10, deren Außenlagen 11,12 aus PEHD bestehen. Zwischen diesen Außenlagen ist eine Kontroll-Lage 13 aus PEHD des Typs elektrisch leitfähig eingebettet. Die Leitfähigkeit in Abhängigkeit von etwaigen Undichtigkeiten der Außenlagen 11,12 kann wiederum, wie in den Figuren 1 und 2 dargestellt, überwacht werden.

## Patentansprüche

1. Anordnung auf Dichtigkeit kontrollierbarer Dichtungsbahnen aus Kunststoff für Deponien, mit einer mindestens doppellagigen Kunststoffdichtungsbahn und einer in diese eingebetteten Kontrollage,
**dadurch gekennzeichnet**,
daß zwei äußere Dichtungsbahnen (1,2) der mindestens doppellagigen Kunststoffdichtungsbahn aus PEHD bestehen und daß zwischen den beiden äußeren Dichtungsbahnen (1,2) eine durchgehende Kontrollage (3) aus elektrisch leitfähigem PEHD eingebettet ist.

2. Anordnung nach Anspruch 1,
**dadurch gekennzeichnet**,
daß die äußeren Dichtungsbahnen (1,2) der mindestens doppellagigen Kunststoffdichtungsbahn glatt sind.

3. Anordnung nach Anspruch 1,
**dadurch gekennzeichnet**,
daß die äußeren Dichtungsbahnen (5,6) der mindestens doppellagigen Kunststoffdichtungsbahn strukturiert sind.

4. Anspruch nach Anspruch 1,
**dadurch gekennzeichnet**,
daß die doppellagige Kunststoffdichtungsbahn (11,12) mit der eingebetteten Kontrollage (13) aus elektrisch leitfähigem PEHD Bestandteile einer Betonschutzplatte (10) sind.

5. Anordnung nach Anspruch 1,
**dadurch gekennzeichnet**,
daß die doppellagige Kunststoffdichtungsbahn mit der eingebetteten Kontrollage aus elektrisch leitfähigem PEHD Bestandteil einer Doppelwand für Behälter- und Schachtbauwerke ist.

6. Anordnung nach einem der vorangehenden Ansprüche,
**dadurch gekennzeichnet**,
daß an die Kontrollage (3) aus elektrisch leitfähigem PEHD eine elektrische Widerstandsmessung (4) angeschlossen ist.

7. Anordnung nach einem der Ansprüche 1 - 5,
**dadurch gekennzeichnet**,
daß an die Kontrollage (7) eine Spannungsquelle (9) und eine Überwachungseinrichtung (8) des von der Spannungsquelle durch die Kontrollage getriebenen Stroms angeschlossen sind.

## Claims

1. Arrangement of impermeable sheets which can be monitored for their impermeability and which are made of plastic for waste disposal sites with an impermeable plastic sheet which is at least in two layers and a monitoring layer which is embedded in it, characterized in that two outer impermeable sheets (1,2) of the at least double layer impermeable plastic sheet consist of PEHD and in that a continuous monitoring layer (3) made of electrically conductive PEHD is embedded between the two outer impermeable sheets (1,2)

2. Arrangement according to claim 1, characterized in that the outer impermeable sheets (1,2) of the at least double layer impermeable plastic sheet are smooth.

3. Arrangement according to claim 1, characterized in that the outer impermeable sheets (5,6) of the at least double layer impermeable plastic sheet are structured.

4. Arrangement according to claim 1, characterized in that the double layer impermeable plastic sheet (11,12) with the embedded monitoring layer (13) made of electrically conductive PEHD are components of a concrete protecting plate (10).

5. Arrangement according to claim 1, characterized in that the double layer impermeable plastic sheet with the embedded monitoring layer made of electrically conductive PEHD is a component of a double wall for container and pit constructions.

6. Arrangement according to one of the preceding claims, characterized in that an electrical resistance meter (4) is connected to the monitoring layer (3) made of electrically conductive PEHD.

7. Arrangement according to one of claims 1 to 5, characterized in that a voltage source (9) and a monitoring device (8) of the current driven through the monitoring layer by the voltage source are connected to the monitoring layer (7).

## Revendications

1. Agencement de nappes étanches en matière plastique, avec possibilité de contrôle d'étanchéité, pour des décharges, avec une nappe étanche en matière plastique à au moins deux couches, et une couche de contrôle noyée dans celle-ci, caractérisé en ce que deux nappes étanches extérieures (1,2) de la nappe étanche en matière plastique à au moins deux couches sont réalisées en PEHD et en ce qu'entre les deux nappes extérieures (1 et 2) est noyée une couche de contrôle (3) continue, réalisée en un PEHD à conductibilité électrique.

2. Agencement selon la revendication 1, caractérisé en ce que les nappes étanches extérieures (1, 2) de la nappe étanche en matière plastique à au moins deux couches sont lisses.

3. Agencement selon la revendication 1, caractérisé en ce que les nappes étanches extérieures (5, 6) de la nappe étanche en matière plastique à au moins deux couches sont structurées.

4. Agencement selon la revendication 1, caractérisé en ce que la nappe étanche en matière plastique (11, 12) à au moins deux couches avec la couche de contrôle (13) noyée, réalisée en PEHD à conductibilité électrique font partie d'une plaque de protection en béton (10).

5. Agencement selon la revendication 1, caractérisé en ce que la nappe étanche en matière plastique à au moins deux couches ayant la couche de contrôle noyée en PEHD à conductibilité électrique fait partie d'une paroi double pour des ouvrages formant récipient et formant puits.

6. Agencement selon l'une des revendications précédentes, caractérisé en ce qu'une mesure de résistance électrique (4) est raccordée à la couche de contrôle (3) constituée en un PEHD à conductibilité électrique.

7. Agencement selon une des revendications 1 à 5, caractérisé en ce qu'à la couche de contrôle (7) est raccordée une source de tension (9) et un dispositif de surveillance (8) du courant passant dans la couche de contrôle sous l'effet de la source de tension.
